# EUROPEAN PATENT APPLICATION

(11) **EP 4 151 912 A1**
(43) Date of publication of application: **22.03.2023**
(21) Application number: 21896275.1
(22) Date of filing: 15.06.2021
(51) Int. Cl.: F24F 1/0003, F24F 1/32, F24F 13/20, F28F 21/08

(54) **AIR CONDITIONER**

(30) Priority: 27.11.2020 CN 202022807477 U; 27.11.2020 CN 202022808884 U; 27.11.2020 CN 202022808116 U; 27.11.2020 CN 202022812916 U; 27.11.2020 CN 202022813172 U
(71) Applicant: GD Midea Air-Conditioning Equipment Co., Ltd., Foshan, Guangdong 528311 (CN)
(72) Inventor: XU, Xuefei, Foshan, Guangdong 528311 (CN); LIU, Yantao, Foshan, Guangdong 528311 (CN); LI, Zifeng, Foshan, Guangdong 528311 (CN)
(74) Representative: Whitlock, Holly Elizabeth Ann
(86) International application number: PCT/CN2021/100066
(87) International publication number: WO 2022/110766

(57) **Abstract**

Disclosed is an air conditioner. The air conditioner includes an indoor unit and an outdoor unit. The indoor unit and the outdoor unit are connected through a refrigerant pipe to form a refrigerant circuit, and the refrigerant pipe is at least partially provided as a flexible structure. In the present disclosure, the refrigerant pipe is at least partially provided as a flexible structure. Therefore, when the indoor unit and the outdoor unit are connected by a refrigerant pipe, the flexible structure can adapt to the environment for bending, and can ensure the smoothness after bending, thereby reducing the installation difficulty of the air conditioner and ensuring normal operation of the air conditioner after being installed.

## Description

### CROSS-REFERENCE TO RELATED APPLICATIONS

This application claims priority to Chinese Patent Application Nos. 202022807477.4, 202022808884.7, 202022808116.1, 202022812916.0 and 202022813172.4, all filed on November 27, 2020, the entire content of which are incorporated herein by reference.

### TECHNICAL FIELD

The present disclosure relates to the technical field of air-conditioning, and in particular, to an air conditioner.

### BACKGROUND

In the related art, the indoor unit and the outdoor unit of the air conditioner are connected by a refrigerant pipe, and the refrigerant pipe needs to be bent to adapt to the installation environment when the air conditioner is installed. However, the existing refrigerant pipes are inconvenient to bend, and are easy to cause blockage after being bent, resulting in inconvenient installation of the air conditioner.

### SUMMARY

The main objective of the present disclosure is to provide an air conditioner, which aims to solve the technical problem of how to facilitate the installation of the air conditioner.

In order to achieve the above objective, the present disclosure provides an air conditioner, including:
an indoor unit; and
an outdoor unit,
the indoor unit and the outdoor unit are connected through a refrigerant pipe to form a refrigerant circuit, and the refrigerant pipe is at least partially provided as a flexible structure.

In an embodiment, the flexible structure is a corrugated pipe.

In an embodiment, the corrugated pipe is made of stainless steel, copper or aluminum.

In an embodiment, the corrugated pipe includes a corrugated section and a straight section connected to both ends of the corrugated section, and the straight section is connected in series to the refrigerant circuit through a connection pipe.

In an embodiment, the connection pipe is sleeved on the straight section.

In an embodiment, the connection pipe is matched with the straight section through a thread; or the connection pipe is matched with the straight section through a clamping protrusion and a clamping groove.

In an embodiment, the connection pipe is fixed to the straight section by welding.

In an embodiment, the connection pipe is made of copper.

In an embodiment, an angle between a corrugated ring of the corrugated pipe and an axial direction is not less than 60° and not greater than 90°.

In an embodiment, the refrigerant circuit includes a first refrigerant pipe connected to the indoor unit, and a second refrigerant pipe connected to the outdoor unit, the first refrigerant pipe is fixed to the indoor unit by welding, clamping or interference fit, and the third refrigerant pipe is fixed to the outdoor unit by welding, clamping or interference fit.

In an embodiment, an outer surface of the refrigerant pipe is provided with a resin layer.

In an embodiment, a thickness of the resin layer is not less than 0.02 mm and not greater than 0.08 mm.

In an embodiment, the outer surface of the refrigerant pipe is further provided with one or more of an anti-aging layer, an anti-condensation layer, a thermal insulation layer and an anti-scratch layer.

In an embodiment, a ratio of a length of the flexible structure to a length of the refrigerant pipe is not less than 6% and not greater than 20%.

In an embodiment, an elastic member is sleeved on an outer periphery of the refrigerant pipe.

In an embodiment, the elastic member is a spring.

In an embodiment, the spring is a cylindrical spring, a tower spring or a progressive spring.

In an embodiment, a wire diameter of the elastic member is not less than 0.6 mm and not greater than 2 mm.

In an embodiment, a difference between a radial dimension of the elastic member and a radial dimension of the refrigerant pipe is not less than 0.2 mm and not greater than 0.6 mm.

In an embodiment, a size of a unilateral gap between the elastic member and the refrigerant pipe is not less than 0.1 mm and not greater than 0.3 mm.

In an embodiment, a ratio of a length of the elastic member to a length of the refrigerant pipe is not less than 0.5%.

In an embodiment, an end of the elastic member is bonded to an outer wall of the refrigerant pipe.

In an embodiment, an outer peripheral wall of the refrigerant pipe is protruded with a limit protrusion for abutting with an end of the elastic member; or a limit step is formed on the outer peripheral wall of the refrigerant pipe for abutting with the end of the elastic member.

In an embodiment, the refrigerant pipe includes:
a first connection member for connecting the indoor unit;
a second connection member for connecting the outdoor unit; and
a plurality of sub-pipes, wherein one end of each sub-pipe is connected to the first connection member, the other end of each sub-pipe is connected to the second connection member, one end of each of the plurality of sub-pipes is communicated with the first connection member, and the other end of each of the plurality of sub-pipes is communicated with the second connection member.

In an embodiment, the plurality of sub-pipes are in parallel and distributed at intervals.

In an embodiment, the first connection member is provided with a plurality of first connection ports for connecting the sub-pipes.

In an embodiment, the refrigerant pipe further includes a first joint pipe installed on the first connection member, the first joint pipe is communicated with the first connection member, and the first joint pipe is connected to the indoor unit.

In an embodiment, the refrigerant pipe includes a first connector, and the first joint pipe is connected to a connection port of the indoor unit through the first connector.

In an embodiment, the first connector is plugged or welded with the first joint pipe; and/or the first connection member is plugged or welded with the sub-pipe.

In an embodiment, the sub-pipe is made of rubber or modified plastic.

In an embodiment, the refrigerant pipe includes a pipe body provided with a first flow channel and a second flow channel, and a heat insulating layer is provided between the first flow channel and the second flow channel.

In an embodiment, the first flow channel is parallel to the second flow channel.

In an embodiment, the refrigerant pipe further includes four quick connectors, and two ends of the first flow channel and two ends of the second flow channel are respectively connected with one of the quick connectors.

In an embodiment, the heat insulating layer is made of high temperature resistant resin or rubber; or the heat insulating layer is a vacuum layer between the first flow channel and the second flow channel.

In an embodiment, the pipe body is made of rubber or metal.

In an embodiment, the first flow channel and the second flow channel are coaxial, the second flow channel is provided inside the first flow channel, and the heat insulating layer is attached to an outer surface of the second flow channel.

In an embodiment, the refrigerant pipe further includes a reinforcing rib for connecting the first flow channel and the second flow channel.

In an embodiment, the refrigerant pipe includes:
a flexible pipe body; and
pump-free vacuum connectors provided at both ends of the flexible pipe body.

In an embodiment, the flexible pipe body is made of rubber or toughening plastic.

In an embodiment, a support protection layer is provided outside the flexible pipe body, the support protection layer is provided around a periphery of the flexible pipe body, and the support protection layer is provided with one or more layers.

In an embodiment, an elastic member is provided between the support protection layer and the flexible pipe body.

In an embodiment, the support protection layer has a porous structure.

In an embodiment, the support protection layer is made of metal, rubber or engineering plastic.

In an embodiment, the pump-free vacuum connectors are self-closing quick connectors.

In the present disclosure, the refrigerant pipe is at least partially provided as a flexible structure. Therefore, when the indoor unit and the outdoor unit are connected by a refrigerant pipe, the flexible structure can adapt to the environment for bending, and can ensure the smoothness after bending, thereby reducing the installation difficulty of the air conditioner and ensuring normal operation of the air conditioner after being installed.

### BRIEF DESCRIPTION OF THE DRAWINGS

In order to more clearly illustrate the technical solutions in the embodiments of the present disclosure or in the prior art, the following briefly introduces the accompanying drawings that need to be used in the description of the embodiments or the prior art. The drawings in the following description are only some embodiments of the present disclosure. For those of ordinary skill in the art, other drawings can also be obtained based on the structures shown in these drawings without any creative effort.
FIG 1 is a schematic structural view of a corrugated pipe according to an embodiment of the present disclosure.
FIG 2 is a schematic cross-sectional view of a corrugated pipe according to an embodiment of the present disclosure.
FIG 3 is a partial enlarged view at portion A in FIG 2.
FIG 4 is a schematic structural view of a refrigerant pipe and an elastic member according to an embodiment of the present disclosure.
FIG 5 is a schematic structural view of a refrigerant pipe and an elastic member according to another embodiment of the present disclosure.
FIG 6 is a schematic structural view of an indoor unit according to an embodiment of the present disclosure.
FIG 7 is a schematic structural view of an outdoor unit according to an embodiment of the present disclosure.
FIG 8 is a schematic structural view of a refrigerant pipe according to an embodiment of the present disclosure.
FIG. 9 is another perspective view of the refrigerant pipe in FIG 8.
FIG. 10 is a cross-sectional view along line P-P in FIG 8.
FIG. 11 is a partial enlarged view at portion A in FIG 8.
FIG. 12 is a partial enlarged view at portion B in FIG 8.
FIG. 13 is a schematic structural view of an outdoor unit and a refrigerant pipe according to an embodiment of the present disclosure.
FIG. 14 is a schematic structural view of an indoor unit and a refrigerant pipe according to an embodiment of the present disclosure.
FIG. 15 is a schematic structural view of a refrigerant pipe according to another embodiment of the present disclosure.
FIG. 16 is a structural schematic view of a pipe body in FIG 15.
FIG. 17 is a cross-sectional view of a pipe body in FIG 15.
FIG. 18 is a cross-sectional view of the pipe body according to another embodiment of the present disclosure.
FIG. 19 is a cross-sectional view of the pipe body according to still another embodiment of the present disclosure.
FIG 20 is a schematic structural view of the refrigerant pipe according to another embodiment of the present disclosure.
FIG 21 is a schematic structural view of a self-contained connection pipe of an indoor unit of the present disclosure.
FIG. 22 is a schematic structural view of a self-contained connection pipe of an outdoor unit of the present disclosure.

### Description of reference signs

| Reference sign | Name | Reference sign | Name |
|---|---|---|---|
| 10 | refrigerant pipe | 120 | first joint pipe |
| 20 | indoor unit | 210 | second connection member |
| 30 | outdoor unit | 220 | second joint pipe |
| 110 | first connection member | 300 | sub-pipe |
| 111 | first surface | 410 | first connector |
| 112 | second surface | 420 | second connector |
| 113 | heat insulating layer | 11 | pipe body |
| 114 | reinforcing rib | 12 | quick connector |
| 115 | first flow channel | 13 | extension pipe |
| 116 | second flow channel | 40 | flexible pipe body |
| 50 | pump-free vacuum connector | 41 | limit protrusion |
| 60 | elastic member | 42 | limit step |
| 70 | first refrigerant pipe | 31 | corrugated section |
| 80 | second refrigerant pipe | 32 | straight section |
| 33 | connection pipe | 90 | corrugated pipe |

The realization, functional characteristics and advantages of the purpose of the present disclosure will be further described with reference to the accompanying drawings in conjunction with the embodiments.

### DETAILED DESCRIPTION OF THE EMBODIMENTS

The technical solutions of the embodiments of the present disclosure will be described in more detail below with reference to the accompanying drawings. It is appreciated that the embodiments to be described are only some rather than all of the embodiments of the present disclosure. All other embodiments obtained by persons skilled in the art based on the embodiments of the present disclosure without creative efforts shall fall within the scope of the present disclosure.

It should be noted that if there is a directional indication (such as up, down, left, right, front, rear...) in the embodiments of the present disclosure, the directional indication is only used to explain the relative positional relationship, movement, etc. of the components in a certain posture (as shown in the drawings). If the specific posture changes, the directional indication will change accordingly.

Besides, the descriptions associated with, e.g., "first" and "second," in the present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature. Besides, the meaning of "and/or" appearing in the disclosure includes three parallel scenarios. For example, "A and/or B" includes only A, or only B, or both A and B. In addition, the technical solutions between the various embodiments can be combined with each other, but they must be based on the realization of those of ordinary skill in the art. When the combination of technical solutions is contradictory or cannot be achieved, it should be appreciated that such a combination of technical solutions does not exist, nor is it within the scope of the present disclosure.

The present disclosure provides an air conditioner.

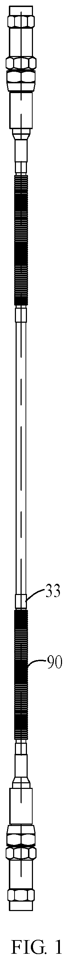

In some embodiments of the present disclosure, as shown in FIG 1 to FIG 7, the air conditioner includes an indoor unit 20 and an outdoor unit 30. The indoor unit 20 and the outdoor unit 30 are connected through a refrigerant pipe to form a refrigerant circuit, and the refrigerant pipe is at least partially provided as a flexible structure.

In this embodiment, the indoor unit 20 has an indoor heat exchanger, the outdoor unit 30 has an outdoor heat exchanger, and the refrigerant pipe connects the indoor heat exchanger and the outdoor heat exchanger to form a refrigerant circuit, and realize the circulating flow of refrigerant between the indoor heat exchanger and the outdoor heat exchanger. The refrigerant pipes can be all provided as flexible structures, and can also be partially provided as flexible structures, which is not limited here, as long as the parts that need to be bent can be provided as flexible structures. The flexible structure can be made of copper material or steel material, which is not limited here, and can be made of metal material to improve the structural strength. The flexible structure is easier to bend, and is not easy to shrink and cause blockage after bending, so that the installation process of the air conditioner is simpler and more convenient, and after the installation is completed, the smooth flow of the refrigerant can be ensured to ensure the normal operation of the air conditioner.

In the present disclosure, the refrigerant pipe is at least partially provided as a flexible structure. Therefore, when the indoor unit 20 and the outdoor unit 30 are connected by a refrigerant pipe, the flexible structure can adapt to the environment for bending, and can ensure the smoothness after bending, thereby reducing the installation difficulty of the air conditioner and ensuring normal operation of the air conditioner after being installed.

As shown in FIG 1 to FIG 3, the flexible structure is a corrugated pipe 90. In this embodiment, the flexible structure is a metal corrugated pipe 90. The corrugated pipe 90 has elasticity, which can balance the stress through tensile and deformation during the bending process, so as to avoid shrinking or breaking during the bending process. Specifically, the corrugated pipe 90 is made of stainless steel, copper or aluminum, and stainless steel has stronger corrosion resistance, which can improve the structural stability of the corrugated pipe 90 and prolong the working life of the corrugated pipe 90. In addition, the stainless steel material is cheaper and easier to obtain than the copper material, which can reduce the production cost of the corrugated pipe 90, thereby reducing the overall cost of the air conditioner.

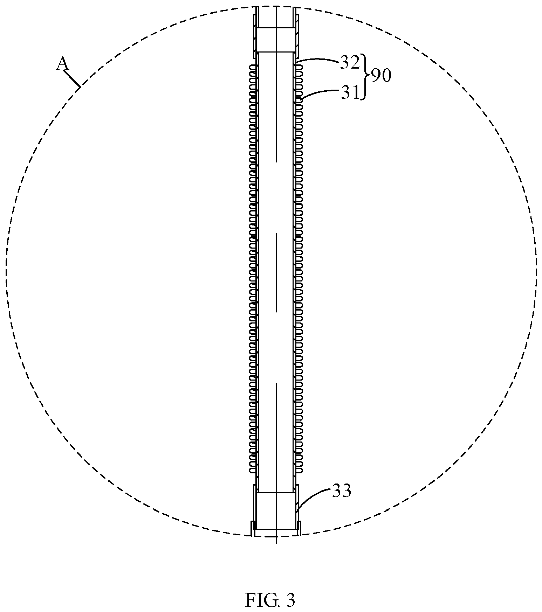

As shown in FIG 3, the corrugated pipe 90 includes a corrugated section 31 and a straight section 32 connected to both ends of the corrugated section 31, and the straight section 32 is connected in series to the refrigerant circuit through a connection pipe 33. In this embodiment, when the refrigerant pipe is partially provided as a corrugated pipe, the refrigerant circuit also has a quick connector and a copper pipe, one end of the corrugated pipe 90 is communicated and fixed with the quick connector, and the other end of the corrugated pipe 90 is communicated and fixed with the copper pipe. The two ends of the corrugated pipe 90 are provided as straight sections 32, which can improve the convenience and strength of connection with the quick connector and the copper pipe. The straight section 32 is connected and fixed with the quick connector and the copper pipe through the connection pipe 33, and the connection pipe 33 can be welded and fixed with the quick connector and the copper pipe, so as to further facilitate the connection as well as the connection strength of the corrugated pipe 90 with the quick connector and the copper pipe. The fixing method of the connection pipe 33 and the straight section 32 of the corrugated pipe 90 may be adhesive fixing or clamping fixing, which is not limited herein.

As shown in FIG 3, the connection pipe 33 is sleeved on the straight section 32. In this embodiment, one end of the connection pipe 33 is sleeved on the straight section 32, and the other end of the connection pipe 33 is sleeved on the copper pipe or the quick connector. Therefore, the matching area between the connection pipe 33 and the straight section 32 can be increased, and the matching strength and stability of the connection pipe 33 and the corrugated pipe 90 can be improved. Specifically, the connection pipe 33 is matched with the straight section 32 through a thread; or the connection pipe 33 is matched with the straight section 32 through a clamping protrusion and a clamping groove. When the connection pipe 33 is matched with the straight section 32 through a thread, the inner peripheral wall of the connection pipe 33 is provided with an internal thread, and the outer peripheral wall of the straight section 32 is provided with an external thread, so that the connection pipe 33 can be screwed to the corrugated pipe 90. When the connection pipe 33 is matched with the straight section 32 through a clamping protrusion and a clamping groove, the outer peripheral wall of the straight section 32 is protruded with a clamping protrusion, and the inner peripheral wall of the connection pipe 33 is provided with a clamping groove. In practical applications, the connection pipe 33 and the straight section 32 can be fixed by welding, which can not only improve the connection strength between the connection pipe 33 and the straight section 32, but also improve the sealing performance between the connector and the straight section 32. The connection pipe 33 and the copper pipe or quick connector on the refrigerant circuit can also be fixed by welding. At this time, the connection pipe 33 is made of copper material to reduce the difficulty of welding and improve the welding effect.

An angle between a corrugated ring of the corrugated pipe 90 and an axial direction is not less than 60° and not greater than 90°. In this embodiment, the corrugated ring of the corrugated pipe 90 is the expansion joint of the corrugated pipe 90. When the corrugated pipe 90 is in a straight state, the angle between the corrugated ring of the corrugated pipe 90 and the axial direction is set to 60° to 90°, which can improve the toughness and stretchability of the corrugated pipe 90 and prolong the service life of the corrugated pipe 90.

The ratio of the length of the flexible structure to the length of the refrigerant pipe is not less than 6% and not greater than 20%. It should be noted that the length of the refrigerant pipe in this embodiment refers to the length of the continuously extending refrigerant pipe connecting the indoor heat exchanger and the outdoor heat exchanger, rather than the length of the refrigerant pipe in the entire refrigerant circuit. Setting the ratio of the length of the flexible structure to the length of the refrigerant pipe to be 6% to 20% enables the flexible structure to have a sufficient bending length for the refrigerant pipe.

As shown in FIG 1 to FIG. 7, the outer periphery of the refrigerant pipe is sleeved with an elastic member 60.

In this embodiment, the outer periphery of the refrigerant pipe can be entirely sleeved with the elastic member 60, or partially sleeved with the elastic member 60, which is not limited here, as long as the part that needs to be bent is sleeved with the elastic member 60. The elastic member 60 can be made of a metal material or a plastic material, which is not limited here, and can be made of a metal material to improve the structural strength. The elastic member 60 may be of a single-section type, or may be a multi-section type arranged along the axial direction of the refrigerant pipe, which is not limited herein. When the refrigerant pipe is bent, the elastic member 60 will bend together with the refrigerant pipe. During the bending process, the elastic member 60 can balance the pressure through stretching and deformation, so as to maintain the original shape in the circumferential direction, thereby preventing the refrigerant pipe from being shrunk and deforming, thereby supporting and protecting the refrigerant pipe. The refrigerant pipe is easier to bend under the support of the elastic member 60, and it is not easy to shrink and cause blockage after bending. Therefore, the installation process of the air conditioner can be more simple and convenient, and after the installation is completed, the smooth flow of the refrigerant can be ensured, so as to ensure the normal operation of the air conditioner.

In the present disclosure, an elastic member 60 is provided outside the refrigerant pipe, and the elastic member 60 can bend together with the refrigerant pipe and generate a reaction force to limit the deformation of the refrigerant pipe, which can support and protect the bending process of the refrigerant pipe, so that the refrigerant pipe can adapt to the environment for bending, and can ensure the fluency after bending, thereby reducing the installation difficulty of the air conditioner and ensuring the normal operation after installation.

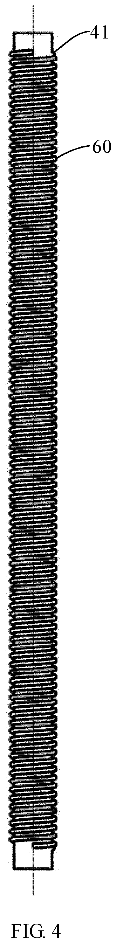

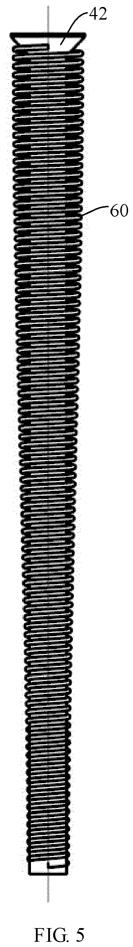

As shown in FIG 4 and FIG 5, the elastic member 60 is a spring. In this embodiment, the spring is a metal spring, which has a higher structural strength and can reduce wear during the bending process, so as to prolong the service life and improve the support and protection effect of the refrigerant pipe. Specifically, the spring is a cylindrical spring, a tower spring or a progressive spring. Cylindrical springs are springs with uniform radial dimensions and elastic coefficients, which are easier to obtain and lower in cost and can reduce the overall cost of air conditioners. The radial dimension of the tower spring will gradually shrink or increase in the axial direction. It is more convenient to use the tower spring to pass the refrigerant pipe from the flared end to the spring, so as to facilitate the spring to sleeve on the refrigerant pipe and improve the assembly efficiency. The elastic coefficient of the progressive spring will vary along the axial direction. The elastic coefficient at the two ends is large and the elastic coefficient in the middle is small, or the elastic coefficient at one end is large and the elastic coefficient at the other end is small, which is not limited herein. The use of the progressive spring can make the springs stretch to different degrees during the bending process, so as to correspond to the stress on different parts of the refrigerant pipe, and further improve the support and protection effect of the refrigerant pipe.

A wire diameter of the elastic member 60 is not less than 0.6 mm and not greater than 2 mm. In this embodiment, if the radial dimension of the elastic member 60 is less than 0.6 mm, it will be difficult to cooperate with the refrigerant pipe. If the wire diameter of the elastic member 60 is larger than 2mm, it will not be able to support the refrigerant pipe. Therefore, setting the wire diameter of the elastic member 60 to 0.6 mm to 2 mm not only facilitates the cooperation of the elastic member 60 with the refrigerant pipe, but also ensures the supporting effect for the refrigerant pipe.

The difference between the radial dimension of the elastic member 60 and the radial dimension of the refrigerant pipe is not less than 0.2 mm and not greater than 0.6 mm. In this embodiment, the radial dimension of the elastic member 60 is larger than the radial dimension of the refrigerant pipe. If the difference between the two is less than 0.2 mm, there will be insufficient space between the refrigerant pipe and the elastic member 60 for the refrigerant pipe to bend and deform, which is inconvenient for the refrigerant pipe to bend. If the difference between the two is greater than 0.6 mm, the elastic member 60 will not be able to support the refrigerant pipe during the deformation process of the refrigerant pipe. Therefore, the difference between the radial size of the elastic member 60 and the radial size of the refrigerant pipe is set to 0.2 mm to 0.6 mm, which not only ensures the smooth bending of the refrigerant pipe, but also ensures the supporting effect of the elastic member 60 on the refrigerant pipe. In practical applications, the size of the unilateral gap between the elastic member 60 and the refrigerant pipe is not less than 0.1 mm, and not greater than 0.3 mm.

The ratio of the length of the elastic member 60 to the length of the refrigerant pipe is not less than 0.5%. It should be noted that the length of the refrigerant pipe in this embodiment refers to the length of the continuously extending refrigerant pipe sleeved by the elastic member 60, rather than the length of the refrigerant pipe in the entire refrigerant circuit. The ratio of the length of the elastic member 60 to the length of the refrigerant pipe is greater than 0.5%, so that the elastic member 60 can effectively support and protect the refrigerant pipe.

The end of the elastic member 60 is bonded to the outer wall of the refrigerant pipe. In this embodiment, the end of the elastic member 60 can be bonded and fixed to the outer wall of the refrigerant pipe through glue, so as to fix the elastic member 60 on the pipe section of the refrigerant pipe that needs to be bent, and improve the stability of the protection effect on the refrigerant pipe.

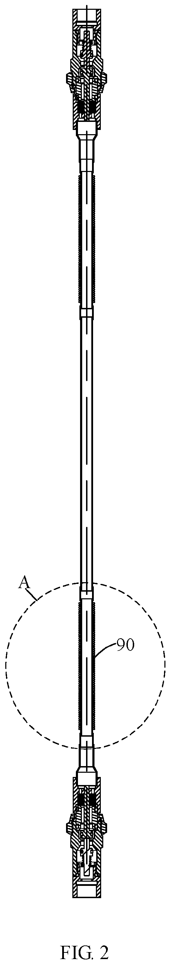

In another embodiment, as shown in FIG 4, limit protrusions 41 are protruded on the outer peripheral wall of the refrigerant pipe for abutting with the end of the elastic member 60. The elastic member 60 is limited by the limit protrusion 41. Thus, the assembly process of the elastic member 60 and the refrigerant pipe is simpler and more convenient, and the refrigerant pipe and the elastic member 60 are not fixedly connected, which facilitates the replacement of the elastic member 60 or the refrigerant pipe, and improves the utilization rate. In still another embodiment, as shown in FIG 2, a limit step 42 is formed on the outer peripheral wall of the refrigerant pipe for abutting with the end of the elastic member 60. The limit step 42 is integrally formed by the refrigerant pipe during the injection molding process. The limit step 42 can also play a detachable limiting role for the elastic member 60, and meanwhile, the contact area between the limit step 42 and the elastic member 60 is larger, which can improve the limiting stability.

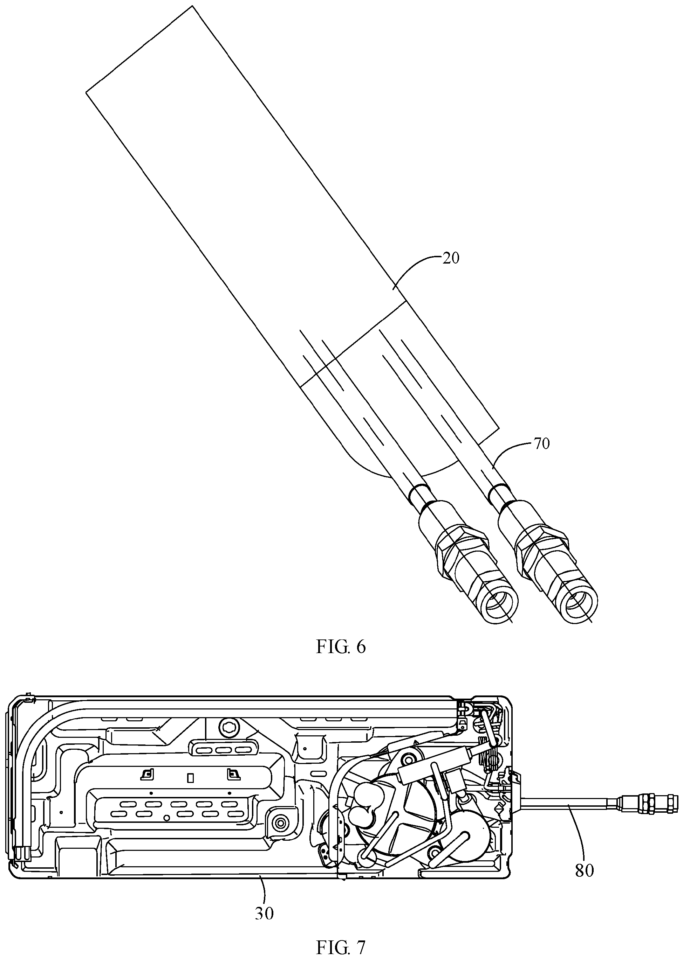

As shown in FIG 6 and FIG 7, the refrigerant circuit includes a first refrigerant pipe 70 connected to the indoor unit 20, and a second refrigerant pipe 80 connected to the outdoor unit 30. The first refrigerant pipe 70 is fixed to the indoor unit 20 by welding, clamping or interference fit. The third refrigerant pipe is fixed to the outdoor unit 30 by welding, clamping or interference fit.

In this embodiment, the first refrigerant pipe 70 and the indoor heat exchanger of the indoor unit 20 are fixedly communicated by welding, clamping or interference fit. Since the indoor heat exchanger has an inlet and an outlet, the number of the first refrigerant pipes 70 is two, and the two first refrigerant pipes 70 are communicated with the inlet and the outlet respectively, and the two first refrigerant pipes 70 are fixedly connected to the indoor heat exchanger. The second refrigerant pipe 80 and the outdoor heat exchanger of the outdoor unit 30 are fixedly communicated by welding, clamping or interference fit. Since the outdoor heat exchanger has an inlet and an outlet, the number of the second refrigerant pipes 80 is two and communicated with the inlet and the outlet respectively, and the two second refrigerant pipes 80 are fixedly connected to the outdoor heat exchanger. The first refrigerant pipe 70 and the indoor unit 20 are fixedly communicated, the second refrigerant pipe 80 and the outdoor unit 30 are fixedly communicated. Therefore, when the air conditioner is installed, it is only necessary to communicate the first refrigerant pipe 70 with the second refrigerant pipe 80, and it is not necessary to communicate the refrigerant pipe with the indoor unit 20 or the outdoor unit 30, thereby improving the installation efficiency of the air conditioner.

The outer surface of the refrigerant pipe is provided with a resin layer, and the resin layer can be coated on the refrigerant pipe. When the air conditioner is installed, the refrigerant pipe needs to be bent to suit the installation environment. The resin layer can support the refrigerant pipe during the bending process, avoid the refrigerant pipe from being broken or shrunk and blocked, so as to improve the installation stability of the refrigerant pipe. The thickness of the resin layer is not less than 0.02 mm and not greater than 0.08 mm, so as to protect the refrigerant pipe while maintaining the flexibility of the refrigerant pipe, and the resin layer can also provide support for the refrigerant pipe, so that the refrigerant pipe can be freely coiled. In practical application, the outer surface of the resin layer is also provided with an aluminum foil layer. The aluminum foil layer can be wrapped around the refrigerant pipe to prevent the refrigerant pipe and the resin layer from aging due to environmental influences, such as ultraviolet rays, thereby improving the structural stability of the refrigerant pipe.

The outer surface of the refrigerant pipe is also provided with one or more of an anti-aging layer, an anti-condensation layer, a thermal insulation layer and an anti-scratch layer. In this embodiment, the anti-aging layer can prevent the refrigerant pipe from being corroded, so as to prolong the working life of the refrigerant pipe. The anti-condensation layer can prevent condensation and dripping on the surface of the refrigerant pipe; the thermal insulation layer can reduce the heat lost by the refrigerant through the refrigerant pipe; the anti-scratch layer can prevent the refrigerant pipe from being scratched to maintain the appearance of the refrigerant pipe. In practical applications, the outer surface of the refrigerant pipe can be provided with a resin layer, an anti-aging layer, an anti-condensation layer, a thermal insulation layer and an anti-scratch layer at the same time. The resin layer is provided on the innermost layer, and the anti-aging layer is provided on the outermost layer, so that the anti-aging layer can simultaneously protect the resin layer and improve the stability of the resin layer. The material of the protection layer on the refrigerant pipe may include PVC, EVA, PE, PP, TPU, etc., and the combination of material parts includes sleeve, gluing, coating, spraying, etc.

The present disclosure provides a refrigerant pipe and an air conditioner including the refrigerant pipe.

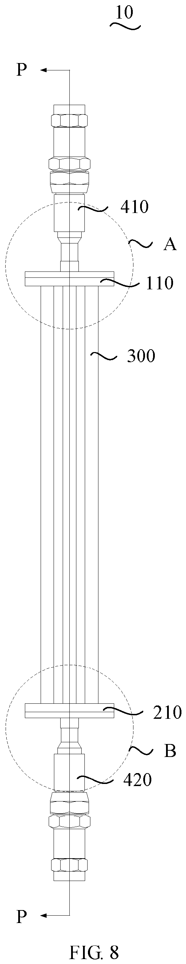

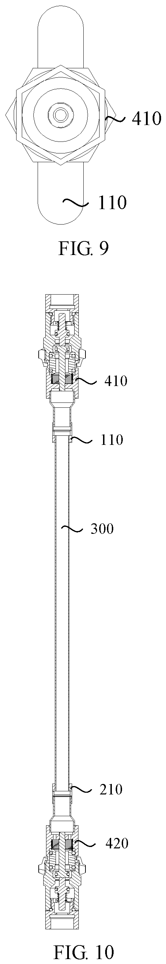

In some embodiments of the present disclosure, as shown in FIG 8 and FIG. 9, the refrigerant pipe 10 is to connect the outdoor unit 30 and the indoor unit 20. The refrigerant pipe 10 includes a first connection member 110, a second connection member 210 and a plurality of sub-pipes 300. The first connection member 110 is to connect the indoor unit 20. The second connection member 210 is to connect the outdoor unit 30. Referring to FIG 8, one end of the sub-pipe 300 is connected to the first connection member 110, and the other end is connected to the second connection member 210. One end of each of the plurality of sub-pipes 300 is communicated with the first connection member 110, and the other end of each of the plurality of sub-pipes 300 is communicated with the second connection member 210.

The refrigerant pipe 10 can be used to connect the evaporator of the indoor unit 20 and the compressor of the outdoor unit 30, can also be used to connect the throttling device of the indoor unit 20 and the condenser of the outdoor unit 30 to realize the flow of the refrigerant between the indoor unit 20 and the outdoor unit 30.

As shown in FIG 8 and FIG 10, the first connection member 110 is for connecting with the indoor unit 20, and a first space (not shown) is provided in the first connection member 110. The first connection member 110 is communicated with the plurality of sub-pipes 300, so that the refrigerants in the plurality of sub-pipes 300 are merged in the first space of the first connection member 110, and then transported to the indoor unit 20. Alternatively, the refrigerant of the indoor unit 20 is transported to the first connection member 110, and distributed to the plurality of sub-pipes 300 through the first space, so as to realize the aggregation and distribution of the refrigerant.

Similarly, as shown in FIG 8 and FIG 10, the second connection member 210 is for connecting with the outdoor unit 30, and a second space (not shown) is provided in the second connection member 210. The second connection member 210 communicates with the plurality of sub-pipes 300, so that the refrigerants in the plurality of sub-pipes 300 are merged in the second space of the second connection member 210, and then transported to the outdoor unit 30. Alternatively, the refrigerant of the outdoor unit 30 is transported to the second connection member 210, and is distributed to the plurality of sub-pipes 300 through the second space, so as to realize the aggregation and distribution of the refrigerant.

When the refrigerant flows from the indoor unit 20 to the outdoor unit 30, the refrigerant flows from the indoor unit 20 to the plurality of sub-pipes 300 through the first space of the first connection member 110, merges in the second space of the second connection member 210, and flows to the outdoor unit 30. Conversely, when the refrigerant flows from the outdoor unit 30 to the indoor unit 20, the refrigerant flows from the outdoor unit 30 to the plurality of sub-pipes 300 through the second space of the second connection member 210, merges in the first space of the first connection member 110, and flows to the indoor unit 20.

As shown in FIG 8 to FIG 10, one end of each of the plurality of sub-pipes 300 is communicated with the first space of the first connection member 110 at the same time, and the other end is communicated with the second space of the second connection member 210 at the same time. Thus, the refrigerant can flow between the indoor unit 20 and the outdoor unit 30, so as to achieve heat exchange between the indoor environment and the outdoor environment, thereby reducing or increasing the indoor environment. It can be understood that the number of the sub-pipes 300 may be two, three, four or five, to increase or decrease the flow rate of the refrigerant. The pipe diameter of the sub-pipe 300 can be set according to the actual refrigerant flow rate and/or the bendability of the sub-pipe 300, so as to take into account the refrigerant pipe 10 and ensure the flow rate of the refrigerant.

The refrigerant flowing in the refrigerant pipe 10 is confluent through the confluence flow channels of the multiple sub-pipes 300, which can obviously stabilize the flow rate, and then through this double-in and double-out method, the flow of the refrigerant can be more stable. Meanwhile, since multiple sub-pipes 300 are used to transport the refrigerant, the flow of the refrigerant is relatively stable, avoiding the problem of vibration caused by uneven refrigerant flow, reducing noise, and effectively improving the user's comfort.

In technical solutions of the present disclosure, one end of each of the plurality of sub-pipes 300 is communicated with the first connection member 110, and the other ends of each of the plurality of sub-pipes 300 are communicated with the second connection member 210. The first connection member 110 and the second connection member 210 are configured to connect the indoor unit 20 and the outdoor unit 30 respectively, so that the refrigerant flows between the indoor unit 20 and the outdoor unit 30 to transmit the refrigerant. The single sub-pipe 300 has better bendability, and the connection pipes with relatively large diameters are replaced by a plurality of sub-pipes 300. In this way, the installer can perform bending operations on the plurality of sub-pipes 300 according to the actual installation environment, to make the bent sub-pipe 300 more suitable for the actual installation environment, to improve the compatibility of the refrigerant pipe 10, thus the problem of poor bendability caused by the large diameter of the connection pipe is solved. In addition, the plurality of sub-pipes 300 can simultaneously transmit refrigerant, which ensures the conveying amount of refrigerant, improves the heat exchange efficiency of the air conditioner, and improves the user experience.

There are various ways of arranging the plurality of sub-pipes 300. As shown in FIG. 8, in an embodiment, the plurality of sub-pipes 300 are in parallel and distributed at intervals. The plurality of sub-pipes 300 are in parallel and distributed at intervals, which improves the aesthetics of the refrigerant pipe 10 and facilitates the bending operation by the installer. It can be understood that, the sub-pipe 300 may be a straight pipe or a bent pipe.

There are various structures of the first connection member 110. As shown in FIG 8 to FIG 10, in an embodiment, the first connection member 110 is provided with a plurality of first connection ports for connecting the sub-pipes 300.

As shown in FIG 8, FIG 11 and FIG 12, the first connection member 110 has a first surface 111 facing the sub-pipe 300 and a second surface 112 facing the indoor unit 20. The second surface 112 is connected to the indoor unit 20. A plurality of first connection ports are defined on the first surface 111 of the first connection member 110. The first connection port is communicated with the first space. The first connection port is connected with the sub-pipe 300 to transport the refrigerant in the sub-pipe 300 to the first space, or to divert the refrigerant in the first space to the sub-pipe 300. It should be noted that the first connection port may be adapted to the sub-pipe 300, or larger than the outer diameter of the sub-pipe 300.

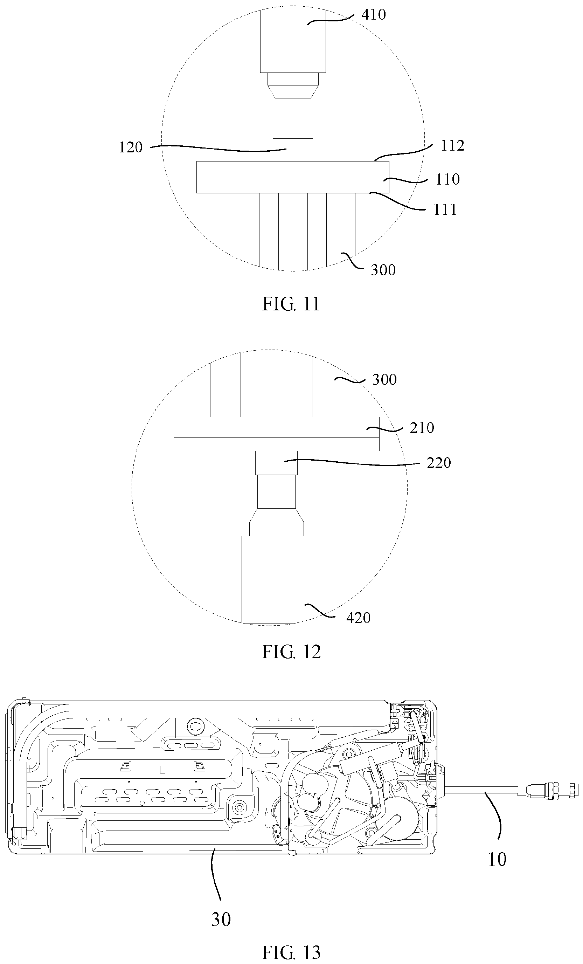

Further, as shown in FIG 11, in an embodiment, the refrigerant pipe 10 further includes a first joint pipe 120 mounted on the first connection member 110, the first joint pipe 120 communicates with the first connection member 110, and the first joint pipe 120 is connected to the indoor unit 20.

The first joint pipe 120 communicates with the first connection member 110, the refrigerant in the first space of the first connection member 110 is transported to the indoor unit 20 through the first joint pipe 120, or the refrigerant of the indoor unit 20 enters the first space of the first connection member 110 from the first joint pipe 120. It can be understood that, in order to avoid liquid leakage, the first joint pipe 120 and the first connection member 110 may be integrally formed.

The first joint pipe 120 may be directly connected to the indoor unit 20 or may be indirectly connected to the indoor unit 20. As shown in FIG 8, in an embodiment, the refrigerant pipe 10 includes a first connector 410, and the first joint pipe 120 is connected to the connection port of the indoor unit 20 through the first connector 410.

It should be noted that, in order to improve the connection efficiency between the refrigerant pipe 10 and the indoor unit 20, the first connector 410 may be a self-closing quick connector, so that after the refrigerant pipe 10 is connected to the indoor unit 20, vacuuming is not required, the installation process is simplified, and the work efficiency is improved.

There are various ways of connecting the first joint pipe 120 to the first connector 410 and the sub-pipe 300. As shown in FIG. 8 to FIG 11, in an embodiment, the first connector 410 is plugged or welded with the first joint pipe 120; and/or the first connection member 110 is plugged or welded with the sub-pipe 300.

One end of the first connector 410 may be a plug-in connector, which is inserted into the first joint pipe 120 to quickly realize the connection between the first connector 410 and the first joint pipe 120. It is also possible that the sub-pipe 300 is plugged on the first connection member 110, and the first connection member 110 and the first joint pipe 120 are also plugged. The first connector 410 and the first joint pipe 120 may be welded by tee, which improves the stability and sealing of the connection between the first connector 410 and the first joint pipe 120, and further prevents liquid leakage. Alternatively, the sub-pipe 300 and the first connection member 110 are connected by welding.

Those skilled in the art can appreciate that, as shown in FIG 8 and FIG 12, the refrigerant pipe 10 may further include a second joint pipe 220 and a second connector 420. The structures of the second joint pipe 220, the second connector 420 and the second connection member 210 may refer to the structures of the first joint pipe 120, the first connector 410 and the first connection member 110. The beneficial effects brought by the technical solutions of the corresponding embodiments will not be repeated here.

For example, as shown in FIG 8 and FIG 12, the second joint pipe 220 is installed on the second connection member 210, the second joint pipe 220 communicates with the second connection member 210. The second joint pipe 220 is connected to the outdoor unit 30; the second joint pipe 220 is connected to the connection port of the outdoor unit 30 through the second connector 420, etc., which will not be repeated here.

The sub-pipes 300 can be made of various materials. In an embodiment, at least one of the sub-pipes 300 is a metal pipe. The metal pipe can be a copper pipe, an aluminum pipe, or a copper-aluminum alloy pipe. Since the cost of the copper pipe is relatively low, in an embodiment, at least one of the sub-pipes 300 is a copper pipe.

Different from the above embodiments, in an embodiment, the sub-pipe 300 is a flexible structure. By using a flexible structure as the sub-pipe 300 to connect the indoor unit 20 and the outdoor unit 30, the flexible structure has strong bending performance, which is very convenient for actual installation work. It should be noted that, among the plurality of sub-pipes 300, some of them may be metal pipes and some of them may be flexible structures; or all of them may be metal pipes or flexible structures.

There are various materials for the flexible structure. In an embodiment, the material of the sub-pipe 300 is rubber or modified plastic. By using rubber or modified plastic materials, the toughness of the sub-pipe 300 is improved, so that the sub-pipe 300 can be easily bent, and the bending performance of the refrigerant pipe 10 is further improved.

In order to improve the flexibility of the sub-pipe 300, in an embodiment, the sub-pipe 300 is a corrugated pipe. The corrugated pipe has good bendability, saves time and effort, and is convenient for the installer to bend according to the actual situation, thereby further improving the work efficiency of the installer.

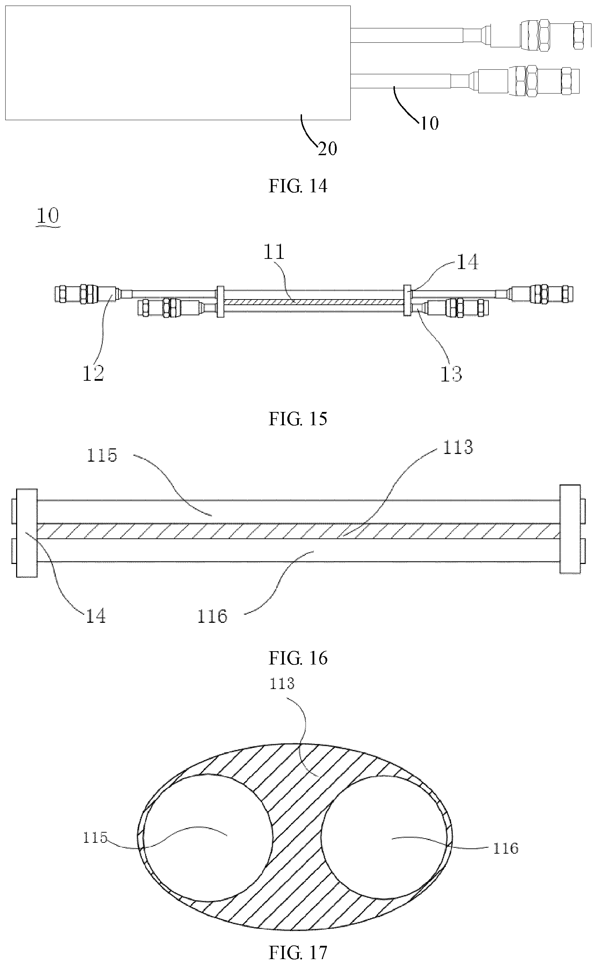

As shown in FIG 13 and FIG 14, the present disclosure further provides an air conditioner. The air conditioner includes an indoor unit 20, an outdoor unit, and a refrigerant pipe 10. The refrigerant pipe 10 is installed on the indoor unit 20 or the outdoor unit 30, and the refrigerant pipe 10 is used to connect the indoor unit 20 and the outdoor unit 30. The specific structure of the refrigerant pipe 10 refers to the above-mentioned embodiments.

The air conditioner may be a wall-mounted air conditioner or a floor-standing air conditioner.

In an embodiment, the number of the refrigerant pipes 10 is two, the indoor unit 20 includes an evaporator and a throttling device, the outdoor unit 30 includes a condenser and a compressor. One of the refrigerant pipes 10 is connected to the evaporator and the compressor, and the other refrigerant pipe 10 is connected to the condenser and the throttling device. The throttling device may include an electronic expansion valve or a capillary pipe.

Two refrigerant pipes 10 may be installed on the indoor unit 20, or two refrigerant pipes 10 may be installed on the outdoor unit 30. Alternatively, one refrigerant pipe 10 is installed on the indoor unit 20, and another refrigerant pipe 10 is installed on the outdoor unit 30. Please continue to refer to FIG 13, when two refrigerant pipes 10 are installed on the outdoor unit 30, after the indoor unit 20 and the outdoor unit 30 are installed in the indoor environment and the outdoor environment, respectively, it is only necessary to connect the refrigerant pipe 10 on the outdoor unit 30 to the connection port of the indoor unit 20 to complete the installation of the air conditioner, thereby simplifying the installation process. At the same time, the connection ports provided on the outdoor unit 30 are not required, which reduces the number of connection ports.

In the related art, the indoor unit and the outdoor unit are connected through a refrigerant pipe, and multiple refrigerant pipes are often required to form a circulating flow of the refrigerant. In this way, each refrigerant pipe needs to be installed separately, thereby causing the problem of low installation efficiency of the refrigerant pipe in the related art. Further, due to the large size of the refrigerant pipe, using a plurality of the refrigerant pipes requires a large installation space.

As shown in FIG 15 and FIG 16, in order to solve the above problem, the present disclosure provides a refrigerant pipe 10. The connection pipe is used to connect the indoor unit and the outdoor unit of the air conditioner. The refrigerant pipe 10 includes a pipe body 11, and the pipe body 11 is provided with a first flow channel 115 and a second flow channel 116. A heat insulating layer 113 is provided between the first flow channel 115 and the second flow channel 116. The first flow channel 115 and the second flow channel 116 are used to supply gaseous or liquid refrigerant to flow between the indoor unit and the outdoor unit, and complete the cycle to achieve the effect of heat exchange. Further, the refrigerant in the indoor unit flows from the first flow channel 115 to the outdoor unit, and then flows back to the indoor unit from the second flow channel 116 after heat exchange to complete the circulating flow of the refrigerant and realize the cooling or heating function of the air conditioner. In this way, the present disclosure proposes a refrigerant pipe 10 that integrates two flow channels, which can greatly reduce the space occupied by the refrigerant pipe 10. When the air conditioner is installed, the refrigerant pipe 10 can be installed at one time without the need to install a plurality of the refrigerant pipes 10 separately, which reduces the installation steps required to install the refrigerant pipe 10 and greatly reduces the installation difficulty of the refrigerant pipe 10. Further, in order to prevent mutual heat exchange between the first flow channel 115 and the second flow channel 116, this heat transfer is poor heat transfer, which may affect the normal operation of the air conditioner. Therefore, a heat insulating layer 113 is provided between the first flow channel 115 and the second flow channel 116.

As shown in FIG 15, FIG 16 and FIG 17, in an embodiment, the first flow channel 115 and the second flow channel 116 are in parallel. The first flow channel 115 and the second flow channel 116 are two parallel flow channels, and the heat insulating layer 113 is provided between the outer surface of the first flow channel 115 and the outer surface of the second flow channel 116. Two ends of the first flow channel 115 and two ends of the second flow channel 116 are respectively formed with independent interfaces. The indoor unit and the outdoor unit are formed with interfaces corresponding to the first flow channel 115 and the second flow channel 116. The interfaces of the refrigerant pipes 10 can be connected to the interfaces provided by the indoor unit or the outdoor unit in a one-to-one correspondence. Further, the shape and size of the first flow channel 115 and the second flow channel 116 are not limited herein. In addition, the first flow channel 115 and the second flow channel 116 may also be arranged inside the pipe body 11 in other forms, such as coaxial arrangements.

As shown in FIG 15, in an embodiment, the refrigerant pipe 10 further includes four quick connectors 12, and two ends of the first flow channel 115 and two ends of the second flow channel 116 are respectively connected to one of the four quick connectors 12. The connection pipe of the air conditioner in the related art is a bare copper pipe, and the end joint is a bell mouth structure, and sealing is achieved by the bell mouth and the conical surface of the stop valve joint. Both ends of the first flow channel 115 and both ends of the second flow channel 116 are provided with a quick connector 12 in a one-to-one correspondence. In this way, the installation process of the refrigerant pipe 10 is relatively complicated. The quick connector 12 is a connector that can realize the connection or disconnection of the pipeline without tools. Further, both the indoor unit and the outdoor unit are provided with a joint that cooperates with the quick connector 12, and the user can conveniently install the refrigerant pipe 10 through the quick connector 12. With this arrangement, the refrigerant pipe 10 can be assembled more conveniently and simply, and fewer tools are required when installing the air conditioner. Non-professionals can also achieve self-installation. Such setting has the effect of improving installation efficiency and saving labor costs.

Further, the end joint of the refrigerant pipe 10 in the related art is a trumpet joint, which inevitably brings in air during installation, so a vacuuming operation is required. The air contains a large amount of nitrogen, oxygen, carbon dioxide and other gases, which cannot be dissolved into the refrigerant, and are generally referred to as non-condensable gases. In addition, the moisture in the air and the refrigerant are not miscible with each other. The existence of moisture and non-condensable gas affects the operation effect of the air conditioner, so the purpose of vacuuming is to remove the non-condensable gas and moisture in the system of the air conditioner, thereby eliminating potential safety hazards. On the other hand, the two ends of the two flow channels of the refrigerant pipe 10 of the present disclosure are provided with quick connectors 12, and the connection method is a quick connection, so that too much air will not flow into the refrigerant pipe 10 during connection. When not connected, the quick connector 12 is in a closed state, and air cannot enter the flow channel. Therefore, the two ends of the refrigerant pipe 10 adopt quick connectors 12, which can be vacuumed in advance during manufacture, and the vacuuming step during air conditioner installation can be omitted under the premise of ensuring safety and the working effect of the air conditioner. Such arrangement further reduces the installation difficulty of the air conditioner. The quick connector can be a self-closing quick connector.

As shown in FIG 15, in an embodiment, the refrigerant pipe further includes an extension pipe 13, the extension pipe 13 is connected to the quick connector 12 and the communication hole, and at least one extension pipe 13 is provided on both sides of the pipe body 11. Two extension pipes are provided on both sides of the pipe body 11, and the lengths of the two extension pipes arranged on the same side of the pipe body are different. Alternatively, one of the extension pipes is respectively provided on both sides of the pipe body. Further, since the two ends of the first flow channel 115 and the two ends of the second flow channel 116 need to be connected to the quick connector 12, the quick connector 12 has a certain width. However, in order to facilitate processing, in an embodiment, the lengths of the first flow channel 115 and the second flow channel 116 are equal. Therefore, if the two extension pipes 13 are also of the same length, the two quick connectors 12 will affect each other, thereby affecting the installation of the refrigerant pipes. In addition, since the quick connector has a certain width, in order to prevent the two from interfering with each other, the width of the pipe body should also be increased accordingly, which takes up space and is not aesthetically pleasing. Thus, the present disclosure proposes various solutions. In an embodiment, two extension pipes 13 are provided on one side of the pipe body 11. That is, two extension pipes of unequal length are provided for the first flow channel 115 and the second flow channel 116 to avoid mutual influence between the quick connectors 12 of the two. In another embodiment, one side of the pipe body 11 is provided with only one extension pipe 13 connected to one of the communication holes, and the other communication hole is directly connected to the quick connector 12. This arrangement can also avoid the mutual influence of the two quick connectors 12 arranged on the same side of the pipe body. The extension pipe 13 can be a copper pipe.

In an embodiment, the material of the heat insulating layer 113 is high temperature resistant resin or rubber; or the heat insulating layer 113 is a vacuum layer provided between the first flow channel 115 and the second flow channel 116. Commonly used materials for the heat insulating layer 113 include high temperature resistant resin and rubber, the high temperature resistant resin is mainly high temperature resistant phenolic resin and the like, and the rubber is often NBR, EPDM and the like. At the same time, vacuum is also a poor conductor of heat, with good thermal insulation effect. A heat insulating plate may be provided between the first flow channel 115 and the second flow channel 116, and a vacuum layer may be provided in the heat insulating plate to prevent poor heat transfer. The heat insulating layer 113 can be provided in various forms. The heat insulating layer 113 may be a heat insulating material filled between the first flow channel 115 and the second flow channel 116. A separate heat insulating plate may also be provided to isolate the first flow channel 115 and the second flow channel 116.

In an embodiment, the pipe body 11 is made of rubber or metal. The metal pipe body 11 or the rubber pipe body 11 is not easily deformed. There will be no flat pipe phenomenon during use. Thereby, the problems of noise, poor cooling or heating effect caused by the deformation of the connection pipe or the flat pipe can be avoided. Further, the material of the pipe body 11 is not limited to metal and rubber, and other suitable materials can also be used.

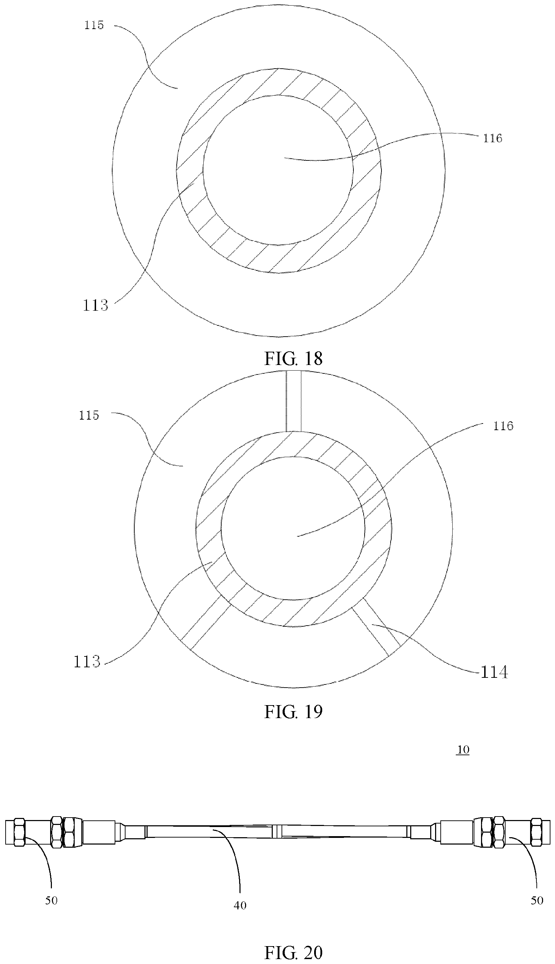

As shown in FIG 18, in an embodiment, the first flow channel 115 and the second flow channel 116 are coaxial, the second flow channel 116 is provided inside the first flow channel 115, and the heat insulating layer 113 is attached to the outer surface of the second flow channel 116. The first flow channel 115 and the second flow channel 116 can be arranged in various ways inside the pipe body 11. The refrigerant in the first flow channel 115 moves between the inner wall of the first flow channel 115 and the outer wall of the second flow channel 116. In order to prevent poor heat exchange between the first flow channel 115 and the second flow channel 116, the heat insulating layer 113 is provided on the outer surface of the second flow channel 116 at this time. In order to achieve better thermal insulation effect, the thermal insulation layer 113 completely isolates the first flow channel 115 and the second flow channel 116. When the first flow channel 115 and the second flow channel 116 are coaxial, the structure of the interface for connecting with the refrigerant pipe 10 needs to correspond to the structure of the coaxial flow channel, to prevent the refrigerants in the first flow channel 115 and the second flow channel 116 from interacting with each other, leakage will not occur. In an embodiment, the second flow channel 116 may also be only provided inside the first flow channel 115. It is not particularly required that the first flow channel 115 and the second flow channel 116 are coaxial, it is only required that the refrigerant can flow normally between the first flow channel 115 and the second flow channel 116 without bad heat conduction.

As shown in FIG 19, in an embodiment, the refrigerant pipe 10 further includes a reinforcing rib 114, and the reinforcing rib 114 connects the second flow channel 116 and the first flow channel 115. Further, such setting is to prevent relative movement of the first flow channel 115 and the second flow channel 116, thereby affecting the heat exchange effect. In an embodiment, the refrigerant pipe 10 is provided with a plurality of reinforcing ribs 114. Each of the reinforcing ribs 114 connects the second flow channel 116 and the first flow channel 115. Further, each of the reinforcing ribs 114 connects the outer surface of the heat insulating layer 113 and the inner surface of the first flow channel 115.

The present disclosure also proposes a refrigerant pipe, which is a flexible hose, which is convenient for storage, installation and handling, and does not require vacuuming after installation, which is easy to install and has high construction efficiency.

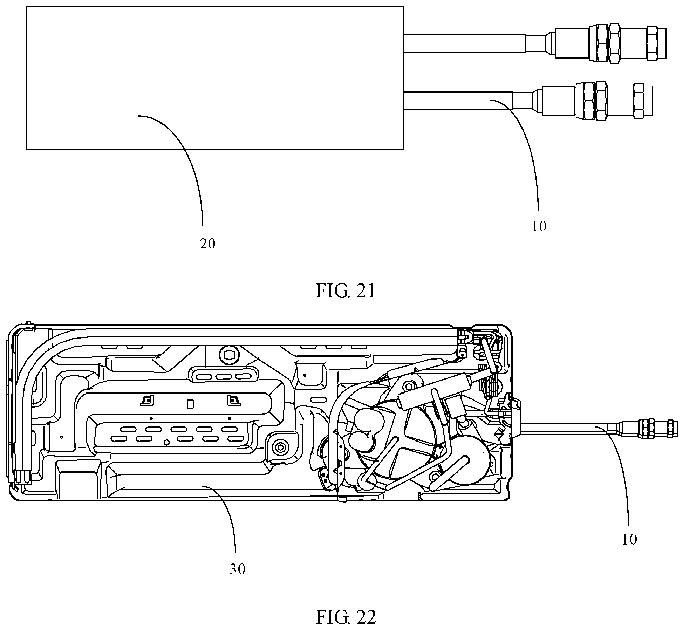

As shown in FIG 20, FIG 20 is a schematic structural view of a refrigerant pipe of the present disclosure. FIG 21 is a schematic structural view of a self-contained connection pipe of an indoor unit of the present disclosure. FIG 22 is a schematic structural view of a self-contained connection pipe of an outdoor unit of the present disclosure.

In some embodiments of the present disclosure, as shown in FIG 20, the present disclosure provides a refrigerant pipe 10. The refrigerant pipe 10 is used to connect the indoor unit and the outdoor unit, and includes a flexible pipe body 40 and pump-free vacuum connectors 50. The pump-free vacuum connectors 50 are provided at both ends of the flexible pipe body 40.

The refrigerant pipe 10 is connected to the indoor unit and the outdoor unit, the refrigerant pipe 10 is used for containing refrigerant liquid, and the refrigerant liquid circulates between the indoor unit and the outdoor unit, thereby realizing the heat exchange of air. The refrigerant pipes 10 are connected through the connectors provided on the indoor unit and the outdoor unit, and the refrigerant pipes 10 are two, one high-pressure pipe and one low-pressure pipe.

Traditional refrigerant pipes are generally copper pipes. Copper pipes have the advantages of good quality, durability, high pressure resistance, corrosion resistance, and long service life. However, the copper pipe is a rigid pipe body, which is inconvenient to install and transport the air conditioner, occupies a large area, and is inconvenient to operate.

The flexible pipe body 40 is made of flexible material. The flexible material pipe body makes the refrigerant pipe 10 not filled with refrigerant fluid in the flexible pipe body 40, Under the action of its own weight, the pipe body naturally collapses along the radial direction, and the pipe body forms self-closing, which is convenient for storage, does not occupy space, and is convenient for installation and handling.

The flexible pipe body 40 may be made of rubber or toughening plastic. Rubber is a highly elastic polymer material with reversible deformation, which is elastic at room temperature, can produce large deformation under the action of a small external force, and can return to its original shape after removing the external force. Rubber is a completely amorphous polymer. Toughening plastics refer to plastic products whose toughness is improved by filling, blending, strengthening and other methods on the basis of general plastics and engineering plastics.

The pipe diameter and pipe wall thickness of the flexible pipe body 40 are designed according to actual needs, which are not limited herein.

The vacuum-free connector 50 can be a self-closing quick connector, which can realize no vacuuming after the refrigerant pipe 10 is installed, simplify the installation process of the refrigerant pipe 10, and make the construction efficiency higher.

After the traditional refrigerant pipe is installed, it is necessary to connect the vacuum pump to the fluoride inlet to vacuumize, open the nut on the fluoride inlet, and then connect it with the hose of the vacuum pump, open the vacuum pump to vacuumize. The installation process of the traditional refrigerant pipe is more troublesome, and usually users cannot install it themselves. The purpose of vacuuming is to facilitate the smooth circulation of refrigerant liquid in the refrigerant pipe and prevent it from being blocked by air.

The self-closing quick connector is formed by connecting the quick female connector connected with the flexible pipe body 40 and the quick male connector connected with the indoor unit or the outdoor unit of the air conditioner. The quick female connector is provided with a sealing locking device, and the quick male connector is provided with an opening device for opening the sealing locking device. When in use, firstly the two quick male connectors are connected to the indoor unit and the outdoor unit of the air conditioner, and then the quick male connector is quickly connected to the quick female connector. In this way, the refrigerant pipe can be directly connected to the indoor unit and the outdoor unit of the air conditioner without exhausting, thus reducing the operator's difficulty in operation and also reducing the installation cost of the air conditioner.

In technical solutions of the present disclosure, the refrigerant pipe 10 is provided as a flexible structure. When the refrigerant pipe 10 is not filled with the refrigerant, under the action of its own weight, the pipe body naturally collapses along the radial direction, and the pipe body forms self-closing, which is convenient for storage, installation and handling. The two ends of the flexible hose are respectively provided with vacuum-free connectors, which are respectively connected to the indoor unit and the outdoor unit through the vacuum-free connectors, so that the refrigerant pipe does not need to be vacuumized after installation, which further facilitates construction and improves installation efficiency.

The flexible pipe body 40 is made of rubber or toughening plastic.

Toughening plastic mainly lies in the improvement of toughening performance. The greater the toughness, the easier it is to deform, and the obtained flexible pipe body has better performance. There are three main factors that affect the toughening effect of plastics. The first one is the characteristics of the matrix resin. Improving the toughness of the matrix resin is conducive to improving the toughening effect of the toughening plastic. Improving the toughness of the matrix resin can be achieved by the following ways: increasing the molecular weight of the matrix resin and making the molecular weight distribution narrower; improving toughness by controlling whether it is crystallized and crystallinity, crystal size and crystal form. For example, adding a nucleating agent to PP increases the crystallization rate and refines the grains, thereby improving fracture toughness.

The second is the characteristics and amount of the toughening agent, and the influence of the particle size of the disperse phase of the toughening agent is that for elastomer toughening plastics, the properties of the matrix resin are different, and the optimal value of the particle size of the elastomer disperse phase is also different. For example, the optimum particle size of rubber in HIPS is 0.8 µm to 1.3 µm, the optimum particle size of ABS is about 0.3 µm, and the optimum particle size of PVC-modified ABS is about 0.1 µm. The influence of the amount of toughening agent is that the amount of toughening agent added has an optimum value, which is related to the particle spacing parameter. The influence of toughening agent glass transition temperature is that generally the lower the glass transition temperature of the elastomer, the better the toughening effect. The influence of toughening agent and matrix resin on the interface strength is that the influence of interfacial bond strength on toughening effect is different for different systems. The influence of the structure of the elastomer toughening agent is related to the type of elastomer, degree of crosslinking, etc.

The third is the binding force between the two phases. The two phases have a good binding force. When stress occurs, it can effectively transfer between phases to consume more energy, and the overall performance of plastics on the macroscopic level is better, especially the improvement of impact strength is the most significant. Usually this binding force can be understood as the interaction force between the two phases. Graft copolymerization and block copolymerization are typical methods to increase the binding force of the two phases. The difference is that they form chemical bonds through chemical synthesis, such as graft copolymer HIPS, ABS, block copolymer SBS, and polyurethane.

For toughening agents or toughen plastics, it is a method of physical blending, but the principle is the same. The ideal blending system should be that the two components are both partially compatible and form separate phases. There is an interface layer between the phases. In the interface layer, the molecular chains of the two polymers diffuse each other and have a clear concentration gradient. By increasing the compatibility between the blended components, it has a good bonding force, thereby enhancing the diffusion to disperse the interface and increasing the thickness of the interface layer.

In an embodiment, a support protection layer is provided on the outside of the flexible pipe body 40, the support protection layer is around the periphery of the flexible pipe body 40, and the support protection layer can be provided with one or more layers. The flexible pipe body 40 is protected by providing a support protection layer to prevent the flexible pipe body 40 from being worn, corroded and the like. It can be understood that, in order to protect the flexible pipe body 40, the support protection layer needs to have better wear resistance and corrosion resistance than the flexible pipe body 40. The support protection layer can also play a role of supporting the refrigerant pipe 10 when the refrigerant pipe 10 is filled with refrigerant fluid, and to prevent the refrigerant pipe 10 from being bent and blocking the refrigerant fluid.

Since the pipe body of the refrigerant pipe 10 is the flexible pipe body 40, when the material of the flexible pipe body 40 is plastic, when the plastic pipe body is severely bent, the flow path of the pipe body will be blocked, thereby affecting the passage of the refrigerant, and affecting the performance of the air conditioner. Therefore, a support protection layer is provided on the periphery of the flexible pipe body 40, and the flexible pipe body 40 is prevented from being bent and broken by resisting the external force through the support protection layer.

On the basis of the above-mentioned embodiment, an elastic member is provided between the support protection layer and the flexible pipe body 40. The flexible pipe body 40 is further protected by arranging the elastic member, so that the elastic member can further resist external force when being bent, preventing it from blocking the refrigerant in parallel.

The support protection layer has a porous structure. The support protection layer is set to a porous structure to improve its deformability, so that it can better prevent the anti-flexible pipe body 40 from being bent and blocking the refrigerant.

The support protection layer is made of metal, rubber or engineering plastics. The metal is preferably a flexible metal to facilitate deformation. The hardness of the rubber or engineering plastics should be greater than that of the flexible pipe body 40 to function as a protection layer.

The present disclosure further provides an indoor unit 20. As shown in FIG 21, the indoor unit 20 includes an evaporator, a throttling device, and a refrigerant pipe 10 connected to the evaporator and/or the throttling device.

The connection method can be welding or crimping, but is not limited to these two methods. Since the indoor unit 20 has its own connection pipe, the number of ports of the indoor unit 20 can be reduced.

The present disclosure further provides an outdoor unit. As shown in FIG 22, the outdoor unit includes a condenser and a compressor, and a refrigerant pipe 10 connected to the condenser and/or the compressor. The connection method can be welding or crimping, but is not limited to these two methods. Since the outdoor unit 30 has its own connection pipe, the number of ports of the outdoor unit 30 can be reduced.

In an embodiment, the indoor unit 20 is equipped with a connection pipe to connect the outdoor unit. The outdoor unit is equipped with a connection pipe to connect the indoor unit. The number of internal and external connection ports is reduced from 4 to 2, which reduces the number of internal and external connection ports and further improves construction efficiency.

In other embodiments, as shown in FIG 21 and FIG 22, the refrigerant pipes 10 may also be provided in the indoor unit 20 or the outdoor unit 30. For example, when the indoor unit 20 is equipped with two refrigerant pipes 10, the outdoor unit is provided with two connectors, which are connected to the connection pipe 100. Alternatively, when the outdoor unit 30 is equipped with two refrigerant pipes 10, the indoor unit is provided with two connectors to be connected to the connection pipes 100.

In another embodiment, the indoor unit 20 and the outdoor unit 30 may also have two refrigerant pipes with only male connectors or female connectors, respectively, and the refrigerant pipes of the indoor unit 20 and the outdoor unit 30 are connected through a male connector and a female connector. For example, the ends of the two refrigerant pipes provided with the indoor unit 20 have only female connectors, while the ends of the two refrigerant pipes provided with the outdoor unit 30 are only male connectors. When installing the air conditioner, the male and female connectors are connected to realize the conduction of the refrigerant pipe. The ends of the two refrigerant pipes provided with the indoor unit 20 may also have only male connectors, or one refrigerant pipe end is a male connector, and the other refrigerant pipe is a female connector. Correspondingly, the ends of the two refrigerant pipes provided with the outdoor unit 30 may be only female connectors, or one end of the refrigerant pipe may be a female connector, and one end of the refrigerant pipe may be a male connector. The refrigerant pipes are arranged in this way, so that the housing of the indoor unit 20 and the body of the outdoor unit 30 do not need to be provided with the port, which can improve construction efficiency and also improve waterproof performance.

Since the refrigerant pipe 10 is a flexible pipe body, even if the refrigerant pipe 10 is provided integrally with the indoor unit 20 and/or the outdoor unit 30, it is easy to accommodate, which does not affect the installation of the indoor unit 20 and the outdoor unit 30, but can reduce the number of connectors and improve the construction efficiency.

The above are only some embodiments of the present disclosure, and do not limit the scope of the present disclosure thereto. Under the concept of the present disclosure, equivalent structural transformations made according to the description and drawings of the present disclosure, or direct/indirect application in other related technical fields are included in the scope of the present disclosure.

## Claims

1. An air conditioner, comprising:
an indoor unit; and
an outdoor unit,
wherein the indoor unit and the outdoor unit are connected through a refrigerant pipe to form a refrigerant circuit, and the refrigerant pipe is at least partially provided as a flexible structure.

2. The air conditioner of claim 1, wherein the flexible structure is a corrugated pipe.

3. The air conditioner of claim 2, wherein the corrugated pipe is made of stainless steel, copper or aluminum.

4. The air conditioner of claim 3, wherein the corrugated pipe comprises a corrugated section and a straight section connected to both ends of the corrugated section, and the straight section is connected in series to the refrigerant circuit through a connection pipe.

5. The air conditioner of claim 4, wherein the connection pipe is sleeved on the straight section.

6. The air conditioner of claim 5, wherein the connection pipe is matched with the straight section through a thread; or the connection pipe is matched with the straight section through a clamping protrusion and a clamping groove.

7. The air conditioner of claim 4, wherein the connection pipe is fixed to the straight section by welding.

8. The air conditioner of claim 4, wherein the connection pipe is made of copper.

9. The air conditioner of claim 2, wherein an angle between a corrugated ring of the corrugated pipe and an axial direction is not less than 60° and not greater than 90°.

10. The air conditioner of claim 1, wherein:
the refrigerant circuit comprises a first refrigerant pipe connected to the indoor unit, and a second refrigerant pipe connected to the outdoor unit,
the first refrigerant pipe is fixed to the indoor unit by welding, clamping or interference fit, and
the third refrigerant pipe is fixed to the outdoor unit by welding, clamping or interference fit.

11. The air conditioner of claim 1, wherein an outer surface of the refrigerant pipe is provided with a resin layer.

12. The air conditioner of claim 11, wherein a thickness of the resin layer is not less than 0.02 mm and not greater than 0.08 mm.

13. The air conditioner of claim 11, wherein the outer surface of the refrigerant pipe is further provided with one or more of an anti-aging layer, an anti-condensation layer, a thermal insulation layer and an anti-scratch layer.

14. The air conditioner of claim 1, wherein a ratio of a length of the flexible structure to a length of the refrigerant pipe is not less than 6% and not greater than 20%.

15. The air conditioner of claim 1, wherein an elastic member is sleeved on an outer periphery of the refrigerant pipe.

16. The air conditioner of claim 15, wherein the elastic member is a spring.

17. The air conditioner of claim 16, wherein the spring is a cylindrical spring, a tower spring or a progressive spring.

18. The air conditioner of claim 15, wherein a wire diameter of the elastic member is not less than 0.6 mm and not greater than 2 mm.

19. The air conditioner of claim 15, wherein a difference between a radial dimension of the elastic member and a radial dimension of the refrigerant pipe is not less than 0.2 mm and not greater than 0.6 mm.

20. The air conditioner of claim 15, wherein a size of a unilateral gap between the elastic member and the refrigerant pipe is not less than 0.1 mm and not greater than 0.3 mm.

21. The air conditioner of claim 15, wherein a ratio of a length of the elastic member to a length of the refrigerant pipe is not less than 0.5%.

22. The air conditioner of claim 15, wherein an end of the elastic member is bonded to an outer wall of the refrigerant pipe.

23. The air conditioner of claim 15, wherein an outer peripheral wall of the refrigerant pipe is protruded with a limit protrusion for abutting with an end of the elastic member; or a limit step is formed on the outer peripheral wall of the refrigerant pipe for abutting with an end of the elastic member.

24. The air conditioner of claim 1, wherein the refrigerant pipe comprises:
a first connection member for connecting the indoor unit;
a second connection member for connecting the outdoor unit; and
a plurality of sub-pipes, wherein one end of each sub-pipe is connected to the first connection member, the other end of each sub-pipe is connected to the second connection member, one end of each of the plurality of sub-pipes is communicated with the first connection member, and the other end of each of the plurality of sub-pipes is communicated with the second connection member.

25. The air conditioner of claim 24, wherein the plurality of sub-pipes are in parallel and distributed at intervals.

26. The air conditioner of claim 25, wherein the first connection member is provided with a plurality of first connection ports for connecting the sub-pipes.

27. The air conditioner of claim 26, wherein the refrigerant pipe further comprises a first joint pipe installed on the first connection member, the first joint pipe is communicated with the first connection member, and the first joint pipe is connected to the indoor unit.

28. The air conditioner of claim 27, wherein the refrigerant pipe comprises a first connector, and the first joint pipe is connected to a connection port of the indoor unit through the first connector.

29. The air conditioner of claim 28, wherein the first connector is plugged or welded with the first joint pipe; and/or the first connection member is plugged or welded with the sub-pipe.

30. The air conditioner of claim 29, wherein the sub-pipe is made of rubber or modified plastic.

31. The air conditioner of claim 29, wherein the refrigerant pipe comprises a pipe body provided with a first flow channel and a second flow channel, and a heat insulating layer is provided between the first flow channel and the second flow channel.

32. The air conditioner of claim 31, wherein the first flow channel is parallel to the second flow channel.

33. The air conditioner of claim 32, wherein the refrigerant pipe further comprises four quick connectors, and two ends of the first flow channel and two ends of the second flow channel are respectively connected with one of the quick connectors.

34. The air conditioner of claim 31, wherein the heat insulating layer is made of high temperature resistant resin or rubber; or the heat insulating layer is a vacuum layer between the first flow channel and the second flow channel.

35. The air conditioner of claim 31, wherein the pipe body is made of rubber or metal.

36. The air conditioner of claim 31, wherein the first flow channel and the second flow channel are coaxial, the second flow channel is provided inside the first flow channel, and the heat insulating layer is attached to an outer surface of the second flow channel.

37. The air conditioner of claim 36, wherein the refrigerant pipe further comprises a reinforcing rib for connecting the first flow channel and the second flow channel.

38. The air conditioner of claim 1, wherein the refrigerant pipe comprises:
a flexible pipe body; and
pump-free vacuum connectors provided at both ends of the flexible pipe body.

39. The air conditioner of claim 38, wherein the flexible pipe body is made of rubber or toughening plastic.

40. The air conditioner of claim 39, wherein a support protection layer is provided outside the flexible pipe body, the support protection layer is provided around a periphery of the flexible pipe body, and the support protection layer is provided with one or more layers.

41. The air conditioner of claim 40, wherein an elastic member is provided between the support protection layer and the flexible pipe body.

42. The air conditioner of claim 41, wherein the support protection layer has a porous structure.

43. The air conditioner of claim 42, wherein the support protection layer is made of metal, rubber or engineering plastic.

44. The air conditioner of claim 38, wherein the pump-free vacuum connectors are self-closing quick connectors.
